# EUROPEAN PATENT APPLICATION

(11) **EP 4 711 841 A1**
(43) Date of publication of application: **18.03.2026**
(21) Application number: 24211299.3
(22) Date of filing: 07.11.2024
(51) Int. Cl.: G02F 1/1333, G02B 27/01

(54) **EYE-FRIENDLY DISPLAY DEVICE**

(30) Priority: 13.09.2024 CN 202411295374
(71) Applicant: Shenzhen Optiave Display Technologies Co. Limited, Shenzhen (CN)
(72) Inventor: LEVOLA, Tapani Kalervo, 33270 TAMPERE (FI); ZHU, Liangfu, SHENZHEN (CN); OUYANG, Shihong, SHENZHEN (CN); ZHU, Yisheng, SHENZHEN (CN)
(74) Representative: Berggren Oy

(57) **Abstract**

The present application discloses a display device and a method for displaying an image, which relates to the field of optical technology.

A display device comprises:
- an optical engine to form a plurality of input light beams corresponding to image points of a virtual image,
- an expander panel to form output light beams by diffractively expanding the input light beams (B0) received from the optical engine,
- a display panel to form a second image on a display surface of the display panel,
- a user interface to receive user input,
- a control unit to control forming of the first input light beams (B0) and to control forming of the second image based on user input received via the user interface, wherein the expander panel is positioned between the display panel and the viewing region, wherein the expander panel is transparent so as to allow viewing the second image through the expander panel.

The display device and the method of displaying images provided in this application are capable of reducing the pressure on the eyes when using the display device.

## Description

### TECHNICAL FIELD

This application relates to the field of optical display technology, specifically, to a display device and a method for displaying images

### BACKGROUND

The lens of the eye is surrounded by the ciliary muscle, which controls the focal distance of the eye. Focusing the eye to a close distance requires contraction of the ciliary muscle, so as to shorten the focal length of the lens of the eye. In this sense, viewing of the images displayed on the rather small touch screen of a conventional mobile phone may cause stress to the eye. Some scientific studies even suggest that long-term viewing to close distances may increase the probability of myopia (i.e. near-sightedness).

### SUMMARY

The purpose of this application is to provide a display device and a method of displaying images with a variety of display modes, thereby reducing the pressure on the eyes when using the display device.

The scope of protection sought for various embodiments of the invention is set out by the independent claims. The embodiments, if any, described in this specification that do not fall under the scope of the independent claims are to be interpreted as examples useful for understanding various embodiments of the invention.

The display device may be arranged to display at least two different types of images, i.e. virtual images and surface images. Both types of images may represent e.g. video, still images, graphics, and/or text. In addition, the display device may optionally comprise data processing capabilities and/or communication capabilities. The display device may be e.g. a portable handheld device, which has data processing capabilities and communication capabilities. The display device may be e.g. a smartphone.

The display device comprises an optical engine to form input light. The input light comprises a plurality of input light beams, which represent the points of an input image. The direction of each input light beam may correspond to the position of an image point of the input image, and the intensity of said input light beam may correspond to the brightness of said image point. The direction of each input light beam corresponds to the angular location of an image point of the virtual image, and the intensity of the input light beam corresponds to the brightness of the image point of the virtual image.

The display device comprises an expander panel to form a plurality of output light beams by diffractively expanding the input light beams. The eye of an observer may see the displayed virtual image when the output light beams impinge on the eye. Each point of the virtual image is represented by a collimated output light beam, so that the virtual image appears to be displayed at a large distance from the eye.

The display device has at least one display mode, which allows the eye to view images with a relaxed ciliary muscle, even in a situation where the distance between the display device and the eye is small, e.g. smaller than 0.5 m. The display device may have e.g. a virtual display mode, where the display device is arranged to display virtual images at a far distance.

The display device comprises also a display panel for displaying surface images. The surface images are formed on a display surface of the display panel. The display panel may be e.g. a liquid crystal display (LCD panel) or a LED panel. The display device has at least one display mode, where images are formed on a display panel such that the distance between the displayed images and the eye is substantially equal to the distance between the display device and the eye, e.g. smaller than 0.5 m. The display device may have e.g. a surface display mode, where the display device is arranged to display surface images on the display panel. Displaying of the surface images may facilitate e.g. providing user input via a touch panel of the display device, as the visual elements of the displayed surface image have definite transverse position with respect to the touch panel.

The eye may observe the displayed virtual image and the displayed surface image when the eye is located in a viewing region of the display device. The viewing region may also be called e.g. as the viewing pupil or as the eye box.

The expander panel may be transparent, and the expander panel may be positioned between the display panel and the viewing region. The display device may comprise a stack, which in turn comprises at least the display panel and the transparent expander panel. The optical attenuation of the transparent expander panel may be e.g. less than 80%, less than 50%, less than 20%, or even less than 10% for visible light, which is transmitted from the display panel through the out-coupling region of the expander panel in the normal direction. The normal direction is perpendicular to the plane of the expander panel. The corresponding transmittance of the expander panel may be e.g. greater than 20%, greater than 50%, greater than 80%, or even greater than 90% for said visible light. The out-coupling region of the expander panel comprises diffractive features, e.g. microscopic grooves. The diffractive grooves may attenuate the transmitted light to some extent, but the attenuation may be limited e.g. by selecting the depth and/or width of the diffractive microscopic grooves.

The viewing area of the display device may be smaller than the sum of the viewing area of the expander panel and the viewing area of the display panel. The viewing area of the expander panel may be e.g. greater than 70% of the frontal area of the display device, and the viewing area of the display panel may also be e.g. greater than 70% of the frontal area of the display device.

In an embodiment, the display panel and the expander panel may be located e.g. within the same housing, so that the viewing area of the expander panel may be e.g. greater than 70% of the frontal area of the housing, and so that the viewing area of the display panel may also be e.g. greater than 70% of the frontal area of the housing. The transparency of the expander panel may allow accommodating the panels in the same housing, without a need to increase the frontal area of the housing.

The control unit of the device may be arranged to change the display mode e.g. based on user input received via a user interface of the device. The device may comprise e.g. a touch panel, and the control unit may be arranged to change the display mode based on a gesture, which is detected by the touch panel.

In an embodiment, the virtual display mode may be used as a default operating mode of the device, so as to reduce the stress of the eye. The control unit of the device may e.g. temporarily change the operating mode from the virtual display mode to the surface display mode when user input is received via a touch panel, and the control unit may automatically change the operating mode from the surface display mode back to the virtual display mode after the user input is received.

Extended operation in the surface display mode may cause stress to the eye. A user may wish to limit usage hours in the surface display mode, so as to reduce stress of the ciliary muscle. In an embodiment, the device may be arranged to provide an indication to a user if the operating time in the surface display mode exceeds a predetermined limit. For example, the device may be arranged to provide an indication to a user if cumulative operating time in the surface display mode exceeds a predetermined number of hours per day. The indication may also be called e.g. as a warning or as an alarm.

The display device may optionally comprise a shutter panel, which may be located between display panel and the expander panel. The shutter panel may control propagation of light from the display panel to the viewing region. The state of the shutter panel may be changed from a transparent state to a light-blocking state, so as to provide a dark background for the virtual image, so as to improve visibility of the displayed virtual image. The shutter panel may be arranged to enable or prevent propagation of light from the display panel to the viewing region.

### BRIEF DESCRIPTION OF THE DRAWINGS

In order to more clearly state the technical scheme of the embodiments of this application, a brief introduction of the drawings required for use in the embodiments will be made below. It should be understood that the following drawings only show some embodiments of this application, so they should not be regarded as a limitation on the scope. For ordinary technical personnel in this field, without creative labor, other related drawings can also be obtained from these drawings
Fig. 1a shows, by way of example, in a side view, the display device operating in the virtual display mode,
Fig. 1b shows, by way of example, in a side view, the display device operating in the surface display mode,
Fig. 1c shows, by way of example, in a side view, the display device operating in the composite display mode,
Fig. 1d shows, by way of example, in a side view, using a shutter panel to provide a dark background for the virtual image,
Fig. 1e shows, by way of example, in a side view, using a shutter panel to provide a dark background for the surface image,
Fig. 2a shows, by way of example, the display device operating in the surface display mode,
Fig. 2b shows, by way of example, the display device operating in the composite display mode,
Fig. 2c shows, by way of example, the display device operating in the virtual display mode,
Fig. 3a shows, by way of example, the display device receiving user input via the touch panel,
Fig. 3b shows, by way of example, method steps for setting a display mode of the display device according to user input,
Fig. 4a shows, by way of example, a schematic view of an optical engine,
Fig. 4b shows, by way of example, a schematic view of a diffractive expander panel,
Fig. 4c shows, by way of example, a schematic view of a surface display panel,
Fig. 4d shows, by way of example, a schematic view of a shutter panel,
Fig. 5 shows, by way of example, a schematic view of dimensions of the components of the display device,
Fig. 6a shows, byway of example, a schematic view of forming output light beams by diffractively expanding input light beams,
Fig. 6b shows, by way of example, a schematic view of dimensions of the diffractive expander panel,
Fig. 6c shows, by way of example, a schematic view of propagation of waveguided light within the transparent substrate of the diffractive expander panel,
Figs. 7a to 7e
   show, by way of example, in a three-dimensional view, forming collimated input light beams, which represent image points of an input image formed on a micro-display,

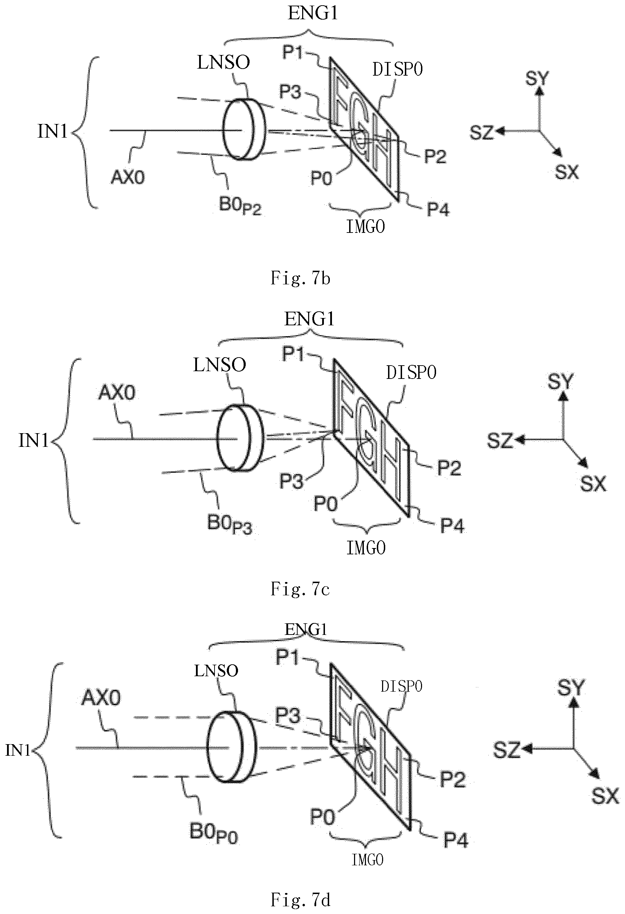

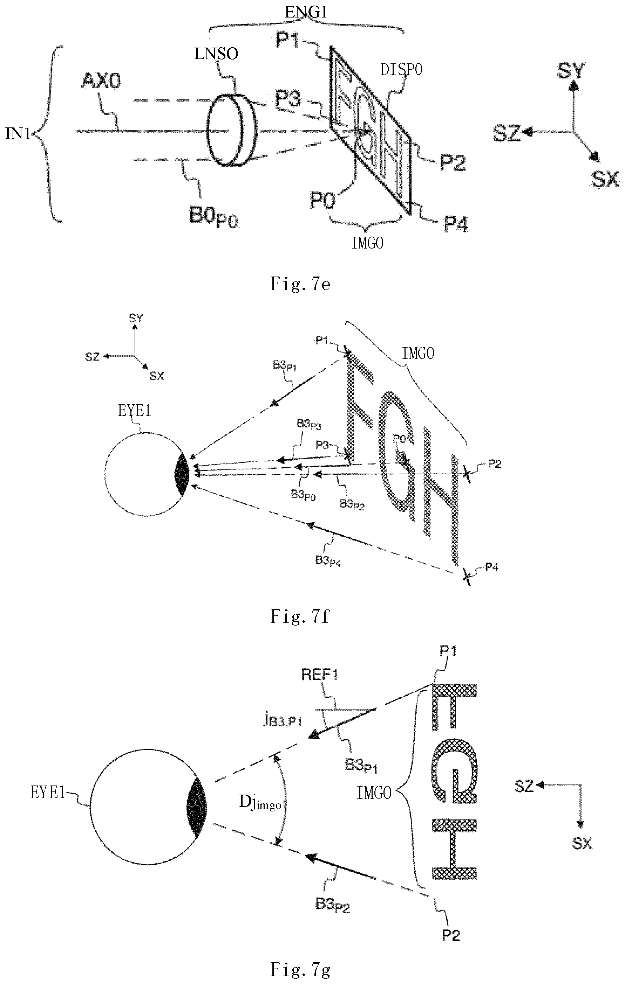

Fig. 7f shows, by way of example, in a three-dimensional view, expanded output light beams, which represent image points of the displayed virtual image,
Fig. 7g shows, by way of example, in a top view, the angular width of the displayed virtual image,

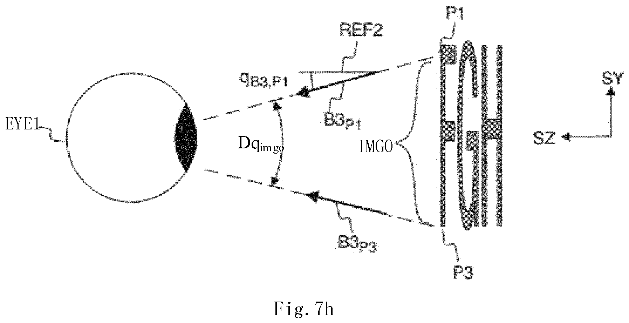

Fig. 7h shows, by way of example, in a side view, the angular height of the displayed virtual image,

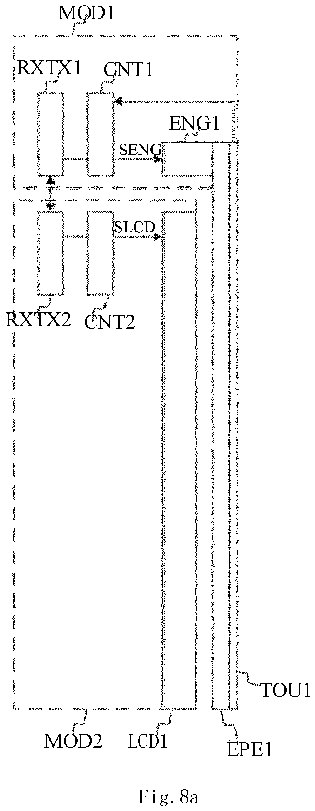

Fig. 8a shows, by way of example, in a side view, forming the display device from two modules,

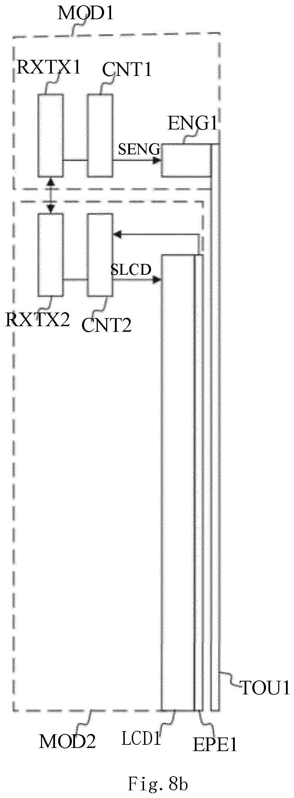

Fig. 8b shows, by way of example, in a side view, forming the display device from two modules,

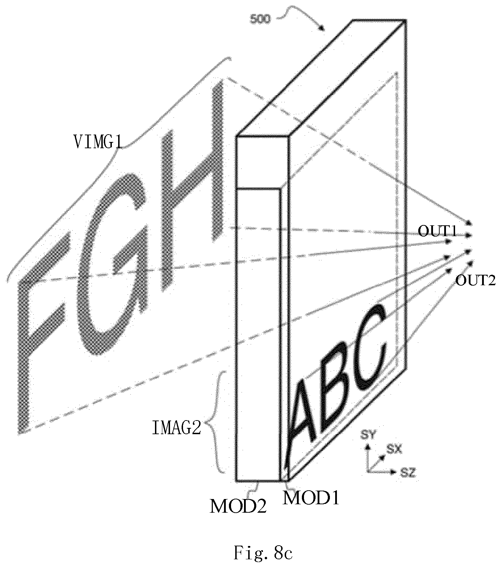

Fig. 8c shows, by way of example, in a three-dimensional view, a display device consisting of two modules,

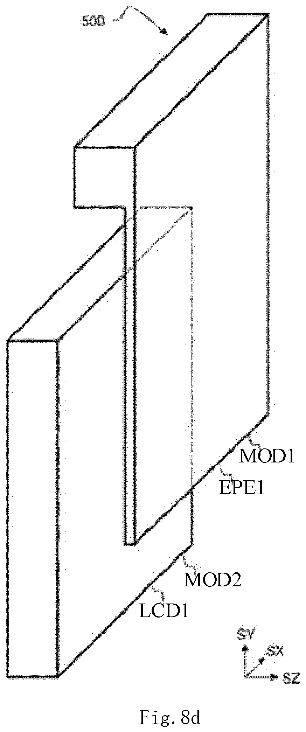

Fig. 8d shows, by way of example, in a three-dimensional view, a display device consisting of two modules,

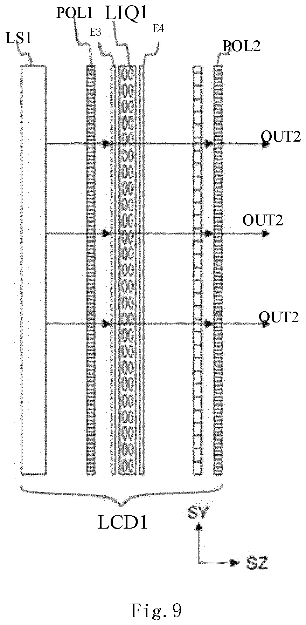

Fig. 9 shows, by way of example, a schematic view of the display panel.

Icon: 500- Display device; LCD1- Display panel; EPE1- Expander panel; STC1-Stack; ENG1- Optical engine; DISP0- Microdisplay; IMG0- Input image; P0 P1 P2 P3 P4- Image point; IN1- Input light; B0- input beam; AX0- optical axis; VIMG1- Virtual image; OUT1- First output light; B3- Output beam; EYE1- the eye of an observer; BOX1- Viewing area; DSRF- Display surface; IMG2- Second image; E0 E1 E2- Input element; z_{VIMG}- Location of virtual image VIMG1; z_{LCD}-second image IMG2 position; z_{EYE}- the position of the EYE1 of the eye; CNT-Control unit; TOU1-Touch panel; MEM1- Memory 1; DATA1- Image data; MEM2-Memory 2; DATA2- program data; UIF1- User interface; COM1- User input; RXTX- Communication unit; SENG- control signal; SLCD- control signal; HOU1-Shell; SUB1- substrate; DOE1- in-coupling element; DOE2- intermediate element; DOE3- out-coupling element; SHU1- Shutter panel; OUT2- Second output light; BCK1- background layer; LNS0- collimating optical system; HAND1-user hand; SRF1- first major surface; SRF2- second major surface; MOD1- the first module; MOD2- Second module; CNT1- The control unit; RXTX1- a communication unit; CNT2- a Second control unit; RXTX2- Second communication unit; LS1- a backlight panel; POL1- a first polarizer; E3- first electrode; LIQ1- a liquid crystal layer; E4- second electrode; POL2- The second polarizer

### DETAILED DESCRIPTION

In order to make the purpose, technical scheme and advantages of the embodiments of this application clearer, the technical scheme in the embodiments of this application will be clearly and completely described in combination with the drawings attached to the embodiments of this application. Obviously, the embodiments described are part of the embodiments of this application, but not all embodiments. The components of embodiments of this application commonly described and shown in the drawings attached herein may be laid out and designed in a variety of different configurations.

Accordingly, the following detailed description of embodiments of the application provided in the attached drawings is not intended to limit the scope of the application for which protection is claimed, but merely represents selected embodiments of the application. Based on the embodiments in this application, all other embodiments acquired by a person of ordinary skill in the field without creative labor fall within the scope of protection in this application.

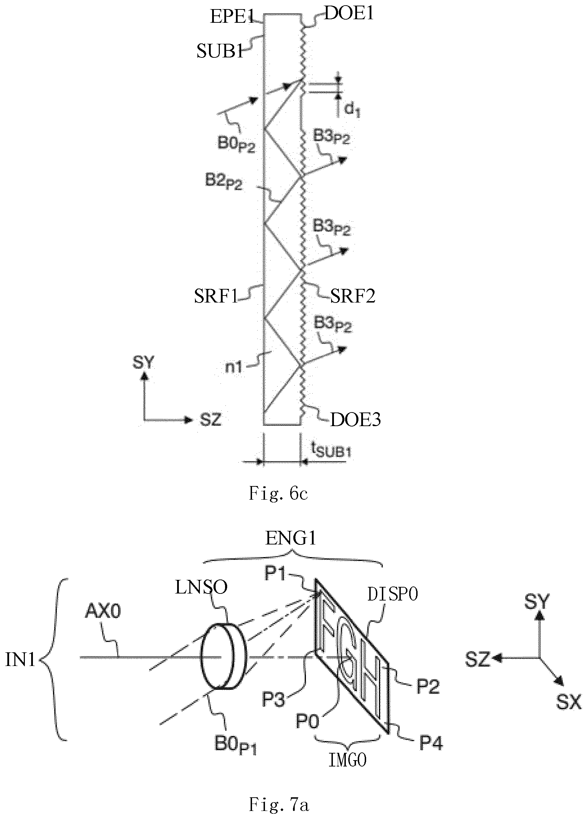

The display device 500 may comprise an optical engine ENG1. The optical engine ENG1 may form input light IN1 e.g. by forming an input image IMG0 on a micro-display DISP0, and by collimating light of image points P0, P1, P2, P3, P4 of the input image IMG0 (Figs. 7a-7e). The input light IN1 comprises a plurality of collimated input light beams B0, which propagate in different directions at different intensities. The input light IN1 may represent the input image IMG0 and the corresponding virtual image VIMG1.

The display device 500 may display the virtual image VIMG1 by forming first output light OUT1. The expander panel EPE1 may form the first output light OUT1 by diffractively expanding the input light IN1. The first output light OUT1 comprises a plurality of output light beams B3, which propagate in different directions at different intensities (Fig. 7f). The eye EYE1 of an observer may see the displayed virtual image VIMG1 when the eye EYE1 is positioned in the viewing region BOX1 of the display device 500, and when the output light OUT1 impinges on the eye EYE1. The viewing region BOX1 may also be called e.g. as the eye box. The viewing region BOX1 refers to the space where the eye EYE1 can be positioned to view the whole angular width and the whole angular height of the displayed virtual image VIMG1.

The direction of each output light beam B3 corresponds to the position of an image point of the virtual image VIMG1, and the intensity of said output light beam B3 corresponds to the brightness of said image point.

Each image point of the virtual image VIMG1 may correspond to a substantially collimated output light beam, so that the eye EYE1 sees the virtual image VIMG1 to be located at a large distance from the eye EYE1. The perceived distance L_{VIMG} between the virtual image VIMG1 and the eye EYE1 may be e.g. greater than 2 m. The perceived distance L_{VIMG} may even be the infinite distance.

The display panel LCD1 may be arranged to form a second image IMG2 on a planar display surface DSRF, which is located within the display panel LCD1 itself. The display panel LCD1 may be e.g. a liquid crystal display (Fig. 9). The display panel LCD1 may be e.g. an OLED display, comprising an array of organic light emitting diodes. The display panel LCD1 may comprise a two-dimensional array of individually controllable display pixels, which are arranged in rows and columns. The two-dimensional array of display pixels may define the display surface DSRF. The number of rows may be e.g. in the range of 200 to 20000, and the number of columns may be e.g. in the range of 200 to 20000.

The distance L_{EYE} between the second image IMG2 and the eye EYE1 may be substantially equal to the distance between the display device 500 and the eye EYE1. The distance L_{EYE} may be e.g. in the range of 0.1 m to 0.5 m. The eye EYE1 needs to accommodate to the distance L_{EYE}, when focusing to the second image IMG2.

The display panel LCD1 may form the second image IMG2 on the display surface DSRF of the display panel LCD1. The distance between the display surface DSRF and the eye EYE1 may be equal to the distance between the second image IMG2 and the eye EYE1.

z_{VIMG} may denote the location of the virtual image VIMG1. z_{LCD} may denote the location of the second image IMG2. z_{EYE} may denote the location of the eye EYE1. For example, the location z_{LCD} of the second image IMG2 may be selected as the reference position (z_{LCD}=0).

The display device 500 may further comprise a control unit CNT for controlling operation of the display device 500.

The display device 500 may further comprise a transparent touch panel TOU1 for receiving user input, by detecting gestures. The touch panel TOU1 may be positioned e.g. on the expander panel EPE1.

The display device 500 may further comprise a memory MEM1 for storing image data DATA1. The image data DATA1 may comprise one or more digital images. The image data DATA1 may comprise a video. The display device 500 may be arranged to form the virtual image VIMG1 and/or the second image IMG2 according to the image data DATA1.

The display device 500 may further comprise a memory MEM2 for storing computer program code DATA2. The control unit CNT may be arranged to control operation of the display device 500 by executing the computer program code DATA2.

The display device 500 may comprise a user interface for receiving user input from a user. The touch panel TOU1 may be arranged to operate as a first user interface. The display device 500 may further comprise an additional user interface UIF1, in addition to the touch panel TOU1. User input COM1 may be received via the touch panel TOU1 and/or via the additional user interface UIF1. The user interface UIF1 may comprise e.g. one or more push buttons, a keypad, a mouse, an acceleration sensor, and/or a gravity sensor. For example, the user may provide user input also by changing orientation of the display device 500, and/or by shaking the display device 500. The display device 500 may also comprise the user interface UIF1 instead of the touch panel TOU1.

The display device 500 may further comprise a communication unit RXTX for receiving and/or sending data. The communication unit RXTX may communicate e.g. image data DATA1 and/or program data DATA2. The communication unit RXTX may communicate e.g. with the internet and/or with a local area network. The communication unit RXTX may communicate e.g. via wireless and/or wired communication. The communication unit RXTX may communicate e.g. via a mobile communications network and/or via Bluetooth (trademark).

The control unit CNT may form a control signal S_{ENG} for controlling operation of the optical engine ENG1. The control signal S_{ENG} may comprise e.g. image data DATA1.

The control unit CNT may form a control signal S_{LCD} for controlling operation of the display panel LCD1. The control signal S_{LCD} may comprise e.g. image data DATA1.

The transparent touch panel TOU1 may form a touch panel signal S_{TOU}. The touch panel signal S_{TOU} may be indicative of a detected gesture. The touch panel signal S_{TOU} may be indicative of received user input COM1. The touch panel TOU1 may be e.g. a capacitive, resistive, optical, and/or ultrasonic touch panel.

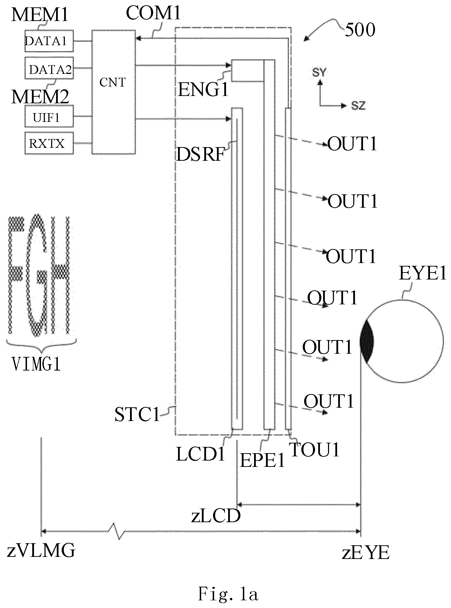

The display device 500 may have different display modes MODEO, MODE1, MODE2. The display device 500 may have a virtual display mode MODE1, where only a virtual image VIMG1 is displayed. Fig. 1a shows operation in the virtual display mode MODE1.

The display device 500 may have a surface display mode where only a surface image IMG2 is displayed. The display device 500 may have a composite display mode, where a second image IMG2 is displayed in addition to the virtual image VIMG1. The display device 500 may be arranged to control the display mode MODEO, MODE1, MODE2 based on user input COM1. The user input COM1 may be received e.g. via the touch panel TOU1 and/or via the user interface UIF1.

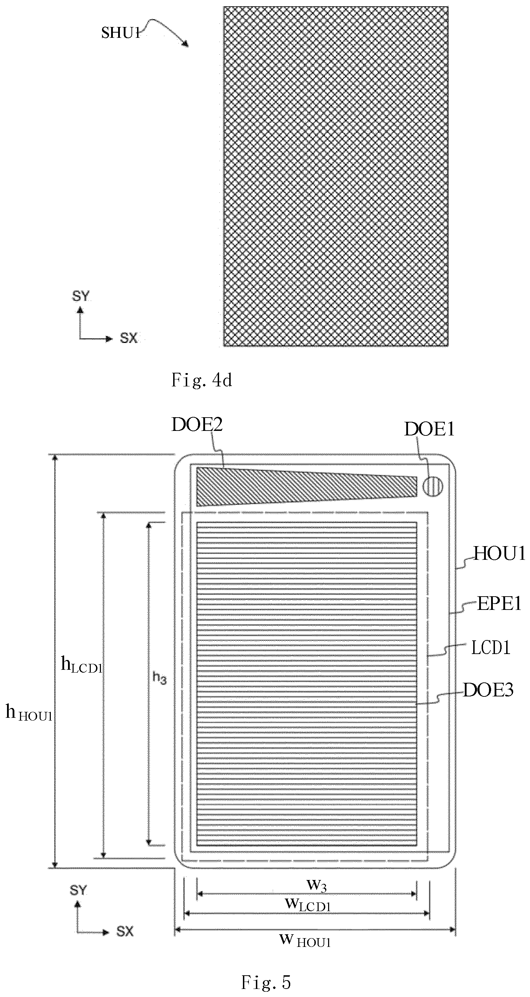

In an embodiment, the expander panel EPE1, the optical engine ENG1, the display panel LCD1, the touch panel TOU1, and the control unit CNT are located within the same housing HOU1 of the device 500 (Fig. 5).

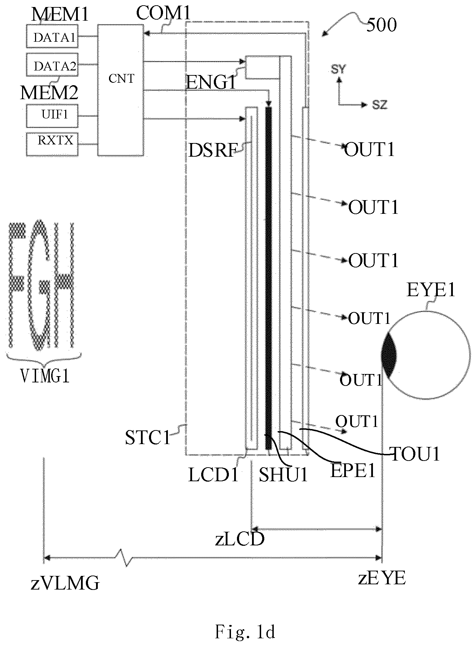

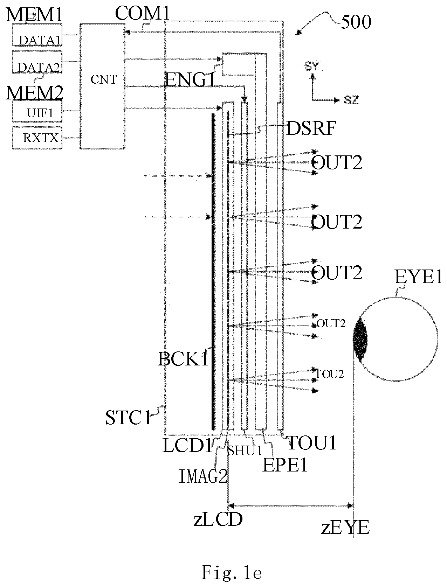

The stack STC1 may optionally comprise the touch panel TOU1, a shutter panel SHU1 (Fig. 1d) and/or a background layer BCK1 (Fig. 1e), in addition to the display panel LCD1 and the expander panel EPE1.

SX, SY, SZ may denote orthogonal directions. The expander panel EPE1 may be parallel with a plane defined by the directions SX and SY. The direction SZ may be perpendicular to the expander panel EPE1.

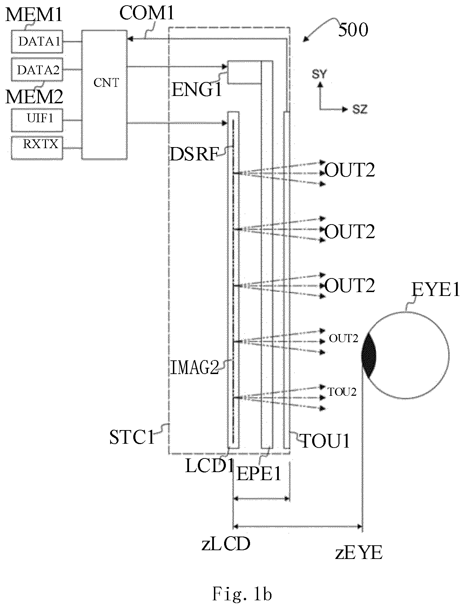

Fig. 1b shows operation in the surface display mode MODE2. The second image IMG2 may be formed on the surface DSRF, which is located within the display panel LCD1. The second image IMG2 may also be called e.g. as surface image, or as a real image. The expander panel EPE1 may be transparent, and the eye EYE1 may see the displayed second image IMG2 through the expander panel EPE1. The expander panel EPE1 may be transparent, so that second output light OUT2 formed by the display panel LCD1 may propagate to the viewing region BOX1 through the expander panel EPE1.

The expander panel EPE1 is positioned between the display panel LCD1 and the viewing region BOX1, wherein the expander panel EPE1 is transparent so as to allow viewing the second image IMG2 through the expander panel EPE1.

The out-coupling region (DOE3) of the expander panel comprises diffractive features, e.g. microscopic grooves. The diffractive grooves may attenuate the transmitted light to some extent, but the attenuation may be limited e.g. by selecting the depth of the diffractive microscopic grooves. The expander panel EPE1 may cause attenuation of output light OUT2 emitted from the display panel LCD1. The expander panel EPE1 may be dimensioned such that the optical attenuation caused by the expander panel EPE1 is smaller than 80%, smaller than 50%, smaller than smaller than 20%, or even smaller than 10%. The attenuation may be determined e.g. for light, which has a wavelength 550 nm, and which is transmitted through the expanded panel EPE1 in the perpendicular direction SZ.

The optical attenuation caused by the expander panel EPE1 may be e.g. smaller than 80%, smaller than 50%, smaller than 20%, or even smaller than 10% for the second output light OUT2, which is transmitted through the substrate SUB1 and through the out-coupling element DOE3 of the expander device EPE1 in a direction (SZ), which is perpendicular to the first major surface SRF1 of the expander device EPE1. The corresponding transmittance of the expander panel EPE1 for the output light OUT2 may be e.g. greater than 20%, greater than 50%, greater than 80%, or even greater than 90%, respectively.

The symbol L_{TOU} may denote the distance between the surface image IMG2 and the outer surface of the touch panel TOU1 in the direction SZ.

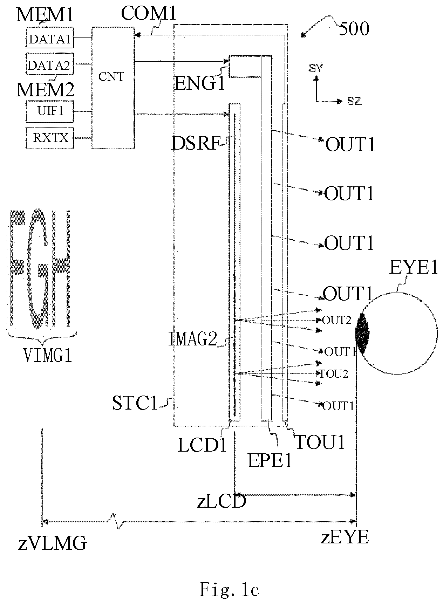

Fig. 1c shows operation in the composite display mode MODEO, where both images VIMG1, IMG2 are displayed simultaneously. The composite display mode MODE0 may also be called e.g. as a hybrid display mode.

Referring to Fig. 1d, the display device 500 may optionally comprise a shutter panel SHU1, which may be controlled to enable or disable propagation of the second output light OUT2 from the display panel LCD1 to the viewing region BOX1. The shutter panel SHU1 may improve visual contrast of the displayed virtual image VIMG1, by providing a controllable dark background for the expander panel EPE1. The control unit CNT may form a control signal S_{SHU} for controlling operation of the shutter panel SHU1. The shutter panel SHU1 may be implemented e.g. by using a controllable layer of liquid crystals.

Referring to Fig. 1e, the display device 500 may further comprise a light-blocking background layer BCK1 to prevent propagation of ambient light AMB0 through the display panel LCD1. The background layer BCK1 may improve visual contrast of the displayed surface image IMG2.

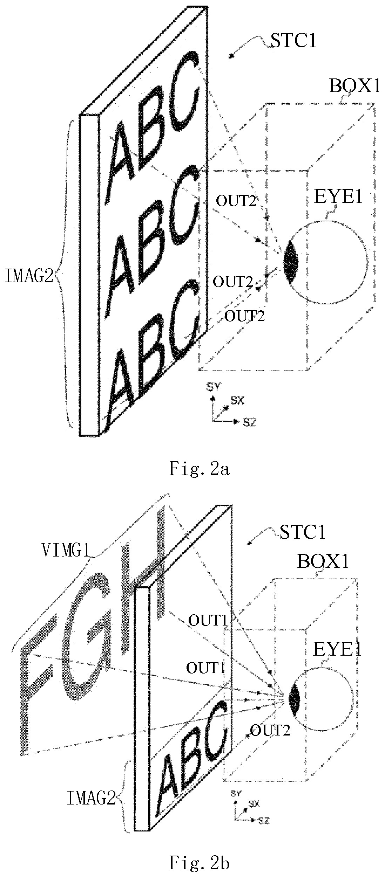

Referring to Fig. 2a, the display device 500 may be arranged to operate in the surface display mode MODE2. The display panel LCD1 may form second output light OUT2, which represents the displayed surface image IMG2. The distance between the displayed surface image IMG2 and the eye EYE1 may be substantially equal to the distance between the display device 500 and the eye EYE1. The surface image IMG2 may comprise e.g. graphics, e.g. a photograph and/or characters. The surface image IMG2 may comprise e.g. characters A,B,C. The surface image IMG2 also may be e.g. an image of a video, which is displayed by using the display panel LCD1.

Referring to Fig. 2b, the display device 500 may be arranged to operate in the composite display mode MODE0. The eye EYE1 may simultaneously receive first output light OUT1 from the expander panel EPE1, and second output light OUT2 from the display panel LCD1. The second output light OUT2 may be transmitted from the display panel LCD1 through the expander panel EPE1 to the viewing region BOX1.

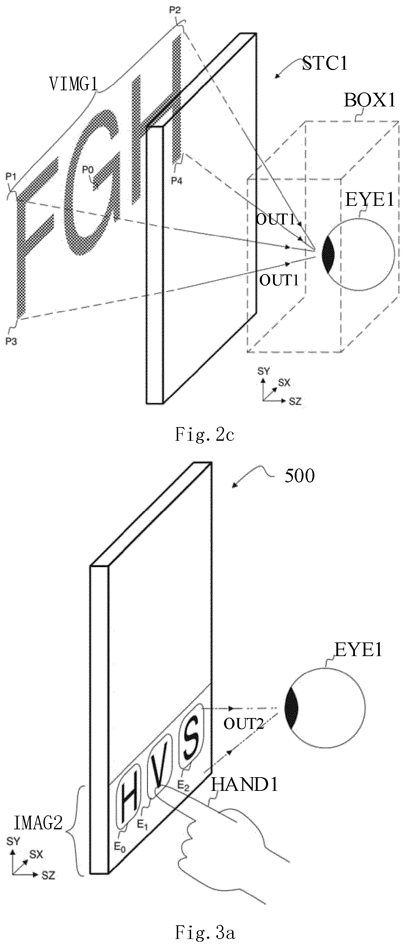

Referring to Fig. 2c, the display device 500 may be arranged to operate in the virtual display mode MODE1. The expander panel EPE1 may form first output light by diffractively expanding input light received from the optical engine ENG1. The first output light OUT1 comprises output light beams, which represent the image points of the displayed virtual image VIMG1.

The virtual image VIMG1 may comprise e.g. graphics, e.g. a photograph and/or characters. The virtual image VIMG1 may comprise e.g. characters F,G,H. The virtual image VIMG1 also may be e.g. an image of a video, which is displayed by using the expander device EPE1.

Referring to Fig. 3a, the display device 500 may comprise the touch panel TOU1 for detecting gestures. The touch panel TOU1 may receive user input (COM1) from the user e.g. by detecting the position of one or more fingers of a hand HAND1 of the user.

The display device 500 may be arranged to display the surface image IMG2 in the surface display mode MODE2 or in the hybrid display mode MODE0. The surface image IMG2 displayed on the display panel LCD1 may comprise one or more input elements E₀, E₁, E₂. The user may provide user input COM1 by touching one or more input elements E₀, E₁, E₂. The user may e.g. select one or more options by touching one or more input elements E₀, E₁, E₂.

The distance between the display panel LCD1 and the touch panel TOU1 (in the direction SZ) may be so small that the detected position of a finger may be associated with the position of a displayed element E₀, E₁, E₂ of the surface image IMG2. Displaying the surface image IMG2 may facilitate receiving user input via the touch panel TOU1.

The combination of the display panel LCD1 and the touch panel TOU1 may be arranged to operate together as a touch screen also in the situation where the transparent expander panel EPE1 is located between the display panel LCD1 and the touch panel TOU1. The symbol L_{TOU} may denote the distance between the surface image IMG2 and the outer surface of the touch panel TOU1 in the direction SZ (see Fig. 1b). The distance L_{TOU} may be e.g. smaller than 3 mm, smaller than 2 mm, smaller than 1 mm, smaller than 0.5 mm, or even smaller than 0.2 mm. The small distance L_{TOU} facilitates associating a position of a finger of the user with a position of an element of a displayed surface image IMG2, in a situation where the position of the finger is detected by the touch panel TOU1. The thickness of the panels EPE1, SHU1, TOU1, and the thickness of optional intermediate gaps between the panels EPE1, SHU1, TOU1 may be selected to be small enough, so as to allow using the combination of the display panel LCD1 and the touch panel TOU1 as a touch screen. The thickness of the transparent expander panel EPE1 may be selected such that the distance L_{TOU} may be e.g. smaller than 3 mm, smaller than 2 mm, smaller than 1 mm, smaller than 0.5 mm, or even smaller than 0.2 mm.

In an embodiment, the touch panel TOU1 may also be positioned between the display panel LCD1 and the expander panel EPE1. The thickness of the expander panel EPE1 may so small that the touch panel TOU1 may be detect the presence of a finger of a hand of the user through the expander panel EPE1. The thickness of the expander panel EPE1 may be selected to be so small that the touch panel TOU1 may detect a hand gesture through the expander panel EPE1. The thickness of the expander panel EPE1 may be e.g. smaller than 1 mm, smaller than 0.5 mm, or even smaller than 0.2 mm.

In an embodiment, the display device 500 may be arranged to set the display mode (MODEO, MODE1, MODE2) according to user input (COM1) received via the touch panel TOU1.

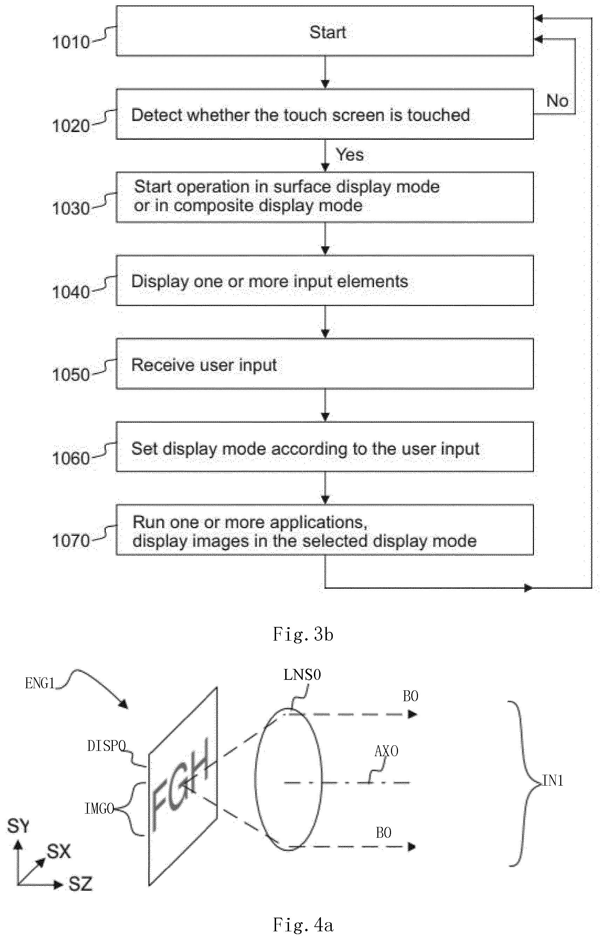

Fig. 3b shows, by way of example, method steps for setting the display mode. Setting of the display mode may be started in step 1010. The display device 500 may check whether the touch panel TOU1 is touched in step 1020. The method may be started again in step 1010 if the touch panel is not touched. The display device 500 may start operation in the surface display mode MODE2 (or in the composite display mode MODE0) in step 1030 if the touch panel TOU1 was touched in step 1020. The display device 500 may display one or more input elements E₀, E₁, E₂ as parts of a displayed surface image IMG2 in step 1040. The user may select a display mode e.g. by touching one of the displayed input elements E₀, E₁, E₂. The touch screen TOU1 may receive user input COM1 by detecting the position of a finger of the hand HAND1 of the user in step 1050. The display device 500 may set the display mode (MODEO, MODE1, MODE2) according to the user input COM1 in step 1060. The display device 500 may run one or more applications while operating in the selected display mode in step 1070. The display device 500 may display one or more images when running an application in the selected display mode. The display device 500 may display a video when running an application in the selected display mode. Selection of the display mode may be started again in step 1010 during running of the application, or after running of the application has been stopped.

The control unit CNT of the display device 500 may be configured to execute the method steps 1010, 1020, 1030, 1040, 1050, 1060, 1070, by executing computer program code DATA2. The control unit CNT may execute the steps e.g. together with the functional units TOU1, LCD1, ENG1.

In an embodiment, the display device 500 may be arranged to start temporary operation in the surface display mode MODE2 (or in the composite display mode MODE0) also when the display device 500 is shaken. The user interface UIF1 may comprise e.g. an acceleration sensor for detecting shaking of the device 500.

Referring to Fig. 4a, the optical engine ENG1 forms input light IN1, which comprises a plurality of input light beams B0. The input light beams B0 may propagate in different directions, corresponding to the image points of an input image IMG0. The intensities of the input light beams B0 may correspond to the brightnesses of the image points of the input image IMG0. The expander panel EPE1 may display the virtual image VIMG1 by diffractively expanding the input light beams B0, so that the displayed virtual image VIMG1 may correspond to the input image IMG0. The optical engine ENG1 may comprise e.g. a micro-display DISP0 and collimating optics LNS0. The micro-display DISP0 may display the input image IMG0. The collimating optics LNS0 may form collimated input light beams B0 by collimating light of image pixels of the input image IMG0. The center of the micro-display DISP0 and the center of the collimating optics LNS0 may together define an optical axis AX0 of the optical engine ENG1.

The input image IMG0 may represent displayed information. The input image IMG0 may represent e.g. graphics and/or text. The input image IMG0 may represent e.g. video. The engine ENG1 may be arranged to generate still images and/or video. The engine ENG1 may generate a real input image IMG0 from a digital image. The engine ENG1 may receive one or more digital images e.g. from an internet server or from a smartphone.

The display DISP0 may comprise a two-dimensional array of display pixels. The display DISP0 may comprise a two-dimensional array of light-emitting display pixels. The engine ENG1 may comprise e.g. one or more light emitting diodes (LED). The display DISP0 may also be called e.g. as a micro display. The display DISP0 may also be called e.g. as a spatial intensity modulator. The input image IMG0 may also be called e.g. as a primary image.

The input image IMG0 may be a monochromatic image, or a multi-color image. The input image IMG0 may be e.g. an RGB image, which may comprise a red (R) partial image, a green (G) partial image, and a blue (B) partial image. The input image IMG0 may be formed e.g. by modulating laser light or by modulating light obtained from one or more light emitting diodes.

The display DISP0 may comprise e.g. one or more micro display imagers, such as liquid crystal on silicon (LCOS), liquid crystal display (LCD), digital micromirror device (DMD). The display DISP0 may generate an input image IMG0 e.g. at a resolution of 1280 × 720 (HD). The display DISP0 may generate an input image IMG0 e.g. at a resolution of 1920 × 1080 (Full HD). The display DISP0 may generate an input image IMG0 e.g. at a resolution of 3840 × 2160 (4K UHD). The input image IMG0 may comprise a plurality of image points P0, P1, P2, .... The engine ENG1 may comprise collimating optics LNS1 to form a light beam from each image pixel. The engine ENG1 may comprise collimating optics LNS1 to form a substantially collimated light beams from light of the image points.

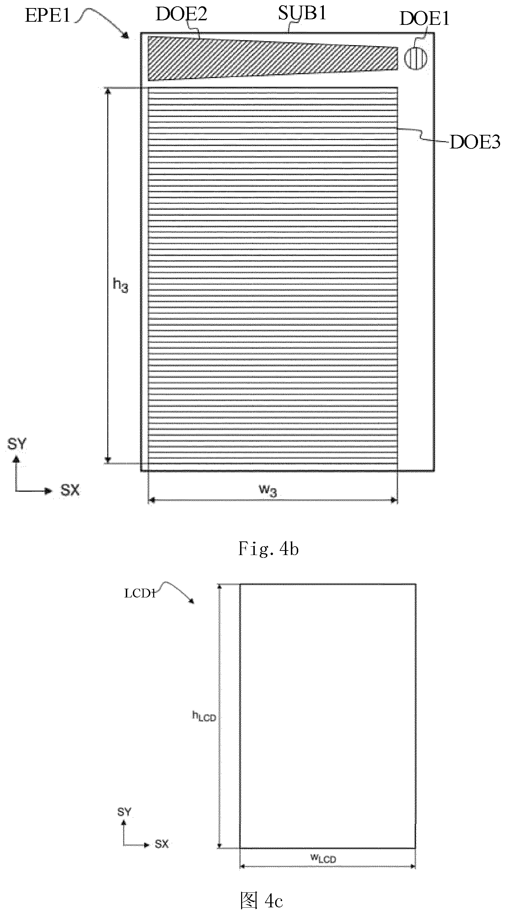

Referring to Fig. 4b, the expander panel EPE1 may comprise a group GRP1 of diffractive elements DOE1, DOE2, DOE3 implemented on a waveguiding substrate SUB1. The group GRP1 of diffractive elements may comprise a diffractive in-coupling element DOE1 to form waveguided light by diffracting input light IN1. The input light IN1 may be received from the optical engine ENG1. The waveguided light may propagate within the substrate SUB1 in one or more transverse directions (SX, SY). The waveguided light may be confined to the substrate SUB1 by total internal reflection (TIR). The expander panel EPE1 may comprise an out-coupling element DOE3 to form output light OUT1 by diffracting the waveguided light out of the substrate SUB1.

The expander panel EPE1 may comprise a group GRP1 of diffractive elements, which contribute to the direction of the output light beams.

The group GRP1 of diffractive elements may comprise only two elements, i.e. the in-coupling element DOE1 and the out-coupling element DOE3. The in-coupling element DOE1 may form first waveguided light by diffracting input light IN1. The first waveguided light may be waveguided within the substrate SUB1. The out-coupling element DOE3 may form output light OUT1 by diffracting the first waveguided light out of the substrate SUB1.

The group GRP1 of diffractive elements may also comprise a least one intermediate element DOE2. The in-coupling element DOE1 may form first waveguided light by diffracting input light IN1. The intermediate element DOE2 may form expanded waveguided light by diffracting the first waveguided light. The out-coupling element DOE3 may form output light OUT1 by diffracting the expanded waveguided light out of the substrate SUB1. The first waveguided light and the expanded waveguided light may be waveguided within the substrate SUB1.

Yet, the group GRP1 of diffractive elements may comprise two or more intermediate diffractive elements, which may operate in parallel or in series. In an embodiment, the expander panel EPE1 may comprise four diffractive elements, which contribute to the direction of the output light beams.

For example, a first intermediate element may form second waveguided light from first waveguided light, and a second intermediate element may form third waveguided light from the second waveguided light. The out-coupling element DOE3 may form output light OUT1 by diffracting the third waveguided light out of the substrate SUB1.

The out-coupling element DOE3 may have a width w₃ and a height h₃. The dimensions w₃, h₃ of the out-coupling element DOE3 may also define the maximum transverse dimensions of the output light OUT1. The dimensions w₃, h₃ of the out-coupling element DOE3 may also define the maximum transverse dimensions of the viewing region BOX1.

Fig. 4c shows the display panel LCD1. The active display area of the display panel LCD1 may have a width w_{LCD} and a height h_{LCD}.

Fig. 4d shows a shutter panel SHU1. The width of the shutter panel SHU1 may be e.g. greater than or equal to the width w_{LCD} of the display panel LCD1. The height of the shutter panel SHU1 may be e.g. greater than or equal to the height h_{LCD} of the display panel LCD1.

Referring to Fig. 5, the expander panel EPE1 may partly or completely overlap the display panel LCD1. The out-coupling element DOE3 of the expander panel EPE1 may partly or completely overlap the active display area of the display panel LCD1.

The display device 500 may comprise a housing HOU1. The display panel LCD1 and the expander panel EPE1 may be disposed within the housing HOU1. The housing HOU1 may have a width w_{HOU} in the direction SX and a height w_{HOU} in the direction SY.

The active display area of the display panel LCD1 may overlap e.g. at least 50% of the area of the out-coupling element DOE. The out-coupling element DOE3 may overlap e.g. at least 50% of the active display area of the display panel LCD1.

The width w_{LCD} of the display panel LCD1 may be e.g. greater than or equal to 70% of the width w_{HOU} of the housing HOU1. The height h_{LCD} of the display panel LCD1 may be e.g. greater than or equal to 70% of the height h_{HOU} of the housing HOU1. The width w₃ of the out-coupling element DOE3 may be e.g. greater than or equal to 70% of the width w_{HOU} of the housing HOU1. The height h₃ of the out-coupling element DOE3 may be e.g. greater than or equal to 70% of the height h_{HOU} of the housing HOU1.

The display device 500 may be e.g. a portable smartphone. The display device 500 may be e.g. a portable tablet computer. The width w_{HOU} may be e.g. in the range of 50 mm to 200 mm, wherein the height h_{HOU} may be e.g. in the range of 100% to 300% of the width w_{HOU}. Alternatively, the height h_{HOU} may be e.g. in the range of 50 mm to 200 mm, wherein the width w_{HOU} may be e.g. in the range of 100% to 300% of the height h_{HOU}. In an embodiment, the same display device 500 may be used in a portrait mode and also in a landscape mode, by rotating the device by 90 degrees.

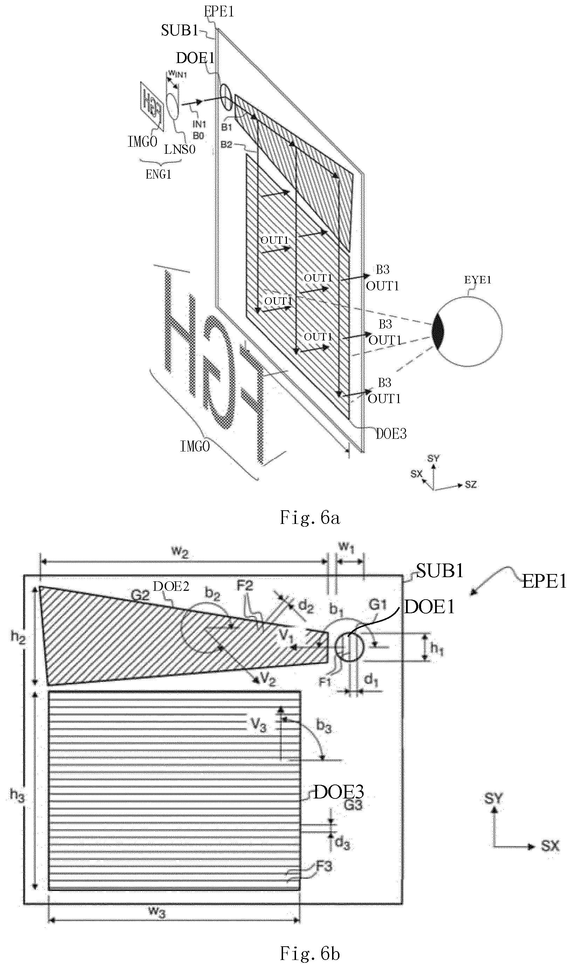

Referring to Fig. 6a, the expander panel EPE1 may form output light OUT1 by diffractively expanding input light IN1.The width w_{OUT1} of the output light OUT1 may be greater than the width w_{IN1} of the input light IN1. The expander panel EPE1 may also be called e.g. as diffractive beam expander or as an exit pupil extender. The input light IN1 may be received from the optical engine ENG1. The input light IN1 may comprise a plurality of substantially collimated input light beams B0, corresponding to image points of the input image IMG0. The output light OUT1 may comprise a plurality of substantially collimated output light beams B3, corresponding to image points of the displayed virtual image VIMG1. The virtual image VIMG1 may correspond to the input image IMG0.

The expander panel EPE1 may comprise a group GRP1 of diffractive elements implemented on a waveguiding substrate SUB1. The expander panel EPE1 may comprise an in-coupling element DOE1, and intermediate element DOE2, and an out-coupling element DOE3. The in-coupling element DOE1 may form first waveguided light B1 by diffracting the input light IN1. The intermediate element DOE2 may form second waveguided light B2 by diffracting the first waveguided light. The out-coupling element DOE3 may form output light OUT1 by diffracting the second waveguided light B2 out of the substrate SUB1. The output light beams B3 of the output light OUT1 represent the image points of the virtual image VIMG1.

Fig. 6b shows, by way of example, dimensions of the expander panel EPE1.

The diffractive in-coupling element DOE1 has a width w₁ and a height h₁. The in-coupling element DOE1 comprises a diffractive grating G1. The in-coupling element DOE1 has diffractive features F1, e.g. microscopic grooves. The in-coupling element DOE1 has a grating period d₁. The in-coupling element DOE1 has a grating vector V₁. The direction of the grating vector V₁ may be specified e.g. by an angle β₁ with respect to a reference direction (e.g. SX).

The diffractive intermediate element DOE2 has a width w₂ and a height h₂. The element DOE2 comprises a diffractive grating G2. The element DOE2 has diffractive features F2, e.g. microscopic grooves. The element DOE2 has a grating period d₂. The element DOE2 has a grating vector V₂. The direction of the grating vector V₂ may be specified e.g. by an angle β₂ with respect to the reference direction.

The diffractive out-coupling element DOE3 has a width w₃ and a height h₃. The out-coupling element DOE3 comprises a diffractive grating G3. The out-coupling element DOE3 has diffractive features F3, e.g. microscopic grooves. The out-coupling element DOE3 has a grating period d₃. The out-coupling element DOE3 has a grating vector V₃. The direction of the grating vector V₃ may be specified e.g. by an angle β₃ with respect to the reference direction.

The magnitude of a grating vector depends on the grating period of a diffraction grating of a diffractive element, and the direction of the grating vector depends on the orientation of the diffraction grating. For example, the magnitude of the grating vector V₁ depends on the grating period d₁ of the diffraction grating G1 of the diffractive element DOE1, and the direction β₁ of the grating vector V₁ depends on the orientation of the diffractive features F1 of the diffraction grating G1.

The expander panel EPE1 comprises several diffractive elements DOE1, DOE2, DOE3 in an optical path. The in-coupling element DOE1 may receive input light beams B0_{P1}, B0_{P2} e.g. through a first major surface SRF1 of the expander panel EPE1. The expander panel EPE1 may be designed such that the vector sum of grating vectors of the diffractive elements in the optical path is equal to zero (V₁+V₂+V₃=0), so as to ensure that that each output light beam B3a_{P1}, B3a_{P2} provided by the out-coupling element DOE3a is parallel with the corresponding input light beam B0_{P1}, B0_{P2} obtained from the optical engine ENG1.

The diffractive elements DOE1, DOE2, DOE3 may be produced by using lithographic techniques. For example, one or more embossing tools may be produced by e-beam lithography, and the diffractions grating of the diffractive elements may be formed by using the one or more embossing tools. A replica of the diffractive microstructure of the embossing tool may be formed on the waveguide plate SUB1 e.g. by using the embossing tool as a mold, or by pressing the surface of the waveguide plate with the embossing tool.

Referring to Fig. 6c, the waveguiding substrate SUB1 of the expander panel EPE1 has a first major surface SRF1 and a second major surface SRF2. The first surface SRF1 may be parallel with the second surface SRF2. t_{SUB1} may denote the distance between the surfaces SRF1, SRF2.

Waveguided light may propagate within the substrate SUB1 by total internal reflection (TIR). Waveguided light (e.g. B2) may be repetitively reflected at the surfaces SRF1, SRF2, until the waveguided light (B2) is coupled out of the substrate.

In particular, a collimated input light beam B0_{P2} may represent an image point P2 of the input image IMG0. Waveguided light B2_{P2} may be formed by diffracting the light of the input light beam B0_{P2}. A collimated output light beam B3_{P2} may be formed by diffracting the light B2_{P2} out of the substrate SUB1. The output light beam B3_{P2} may represent the image point P2 of the displayed virtual image VIMG1.

The expander panel EPE1 comprises the waveguiding substrate plate SUB1. The diffractive elements DOE1, DOE2, DOE3 may be implemented on the waveguiding plate SUB1. The waveguide plate SUB1 comprises a planar waveguiding core. In an embodiment, the plate SUB1 may optionally comprise e.g. one or more cladding layers, one or more protective layers, and/or one or more mechanically supporting layers. The thickness t_{SUB1} may refer to the thickness of a planar waveguiding core of the plate SUB1.

The substrate SUB1 may have a refractive index n₁. The refractive index n₁ may be e.g. in the range of 1.5 to 1.9. The waveguide plate SUB1 may comprise or consist essentially of transparent solid material. The plate SUB1 may comprise e.g. glass, polycarbonate or polymethyl methacrylate (PMMA). The diffractive optical elements may be formed e.g. by molding, embossing, and/or etching. The diffractive optical elements may be implemented e.g. by one or more surface diffraction gratings. In particular, the diffractive optical elements of the expander panel EPE1 may be surface diffraction gratings, which may be implemented on the same major surface (SRF1 or SRF2) of the waveguide plate SUB1. Forming the elements on the same major surface may facilitate production.

Figs. 7a to 7e illustrate how collimated input light beams B0_{P0}, B0_{P1}, B0_{P2}, B0_{P3}, B0_{P4} may be formed by collimating light of image points P0, P1, P2, P3, P4 of a input image IMG0. The input light IN1 received from the optical engine ENG1 may comprise a plurality of input light beams B0_{P0}, B0_{P1}, B0_{P2}, B0_{P3}, B0_{P4}. The point P0 may be a center point of the image IMG0, VIMG1. The points P1, P2, P3, P4 may be corner points of the image IMG0, VIMG1.

Referring to Fig. 7f, the expander panel EPE1 may form an output light beam B3_{P0} by diffractively expanding light of the input light beam B0_{P0}. The output light beam B3_{P0} may represent the image point P0 of the input image IMG0 and the image point P0 of the virtual image VIMG1.

The input image IMG0 may comprise a center point P0 and four corner points P1, P2, P3, P4. P1 may denote an upper left corner point. P2 may denote an upper right corner point. P3 may denote a lower left corner point. P4 may denote a lower right corner point. The input image IMG0 may comprise e.g. the graphical characters "F","G", and "H". The input image IMG0 may represent displayed information.

The expander panel EPE1 may form output light beams B3_{P1}, B3_{P2}, B3_{P3}, B3_{P4} by diffractively expanding light of the input light beams B0_{P1}, B0_{P2}, B0_{P3}, B0_{P4}. The output light beams B3_{P1}, B3_{P2}, B3_{P3}, B3_{P4} may represent the image points P1, P2, P3, P4 of the input image IMG0 and the image points P1, P2, P3, P4 of the virtual image VIMG1.

The display device 500 may comprise:
- an optical engine ENG1 to form input light IN1, which comprises a plurality of input light beams B0_{P0},B0_{P1}, BO_{P2}, B0_{P3}, B0_{P4} representing an input image IMG0 and the corresponding virtual image VIMG1,
- an expander panel EPE1 to form output light OUT1 by diffractively expanding the input light IN1, wherein the output light OUT1 comprises a plurality of output light beams B3_{P0},B3_{P1}, B3_{P2}, B3_{P3}, B3_{P4} representing the input image IMG0 and the corresponding virtual image VIMG1.

In an embodiment, the expander panel EPE1 may form the output light beam B3_{P0} from the input light beam P0_{P0} such that the output light beam B3_{P0} is parallel with the input light beam P0_{P0}. The output light beam B3_{P1} may be formed from the input light beam P0_{P1} such that the output light beam B3_{P1} is parallel with the input light beam P0_{P1}. The output light beam B3_{P2} may be formed from the input light beam P0_{P2} such that the output light beam B3_{P2} is parallel with the input light beam PO_{P2}. The output light beam B3_{P3} may be formed from the input light beam P0_{P3} such that the output light beam B3_{P3} is parallel with the input light beam P0_{P3}. The output light beam B3_{P4} may be formed from the input light beam P0_{P4} such that the output light beam B3_{P4} is parallel with the input light beam P0_{P4}.

Referring to Figs. 7g and 7h, the virtual image VIMG1 may have an angular width Δφ_{VIMG} and an angular height Δθ_{VIMG}. The direction of each light beam may be specified e.g. by an azimuth angle (e.g. φ_{B3,P1}) and by an elevation angle (e.g. θ_{B3,P1}). REF1 may denote a reference plane defined by the directions SY and SZ. REF2 may denote a reference plane defined by the directions SX and SZ.

Referring to Figs. 8a, 8b, 8c, 8d, the display device 500 may be assembled from two modules MOD1, MOD2. The first module MOD1 may comprise the transparent expander panel EPE1 for displaying virtual images VIMG1. The second module MOD2 may comprise the display panel LCD1 for displaying surface images IMG2. The first module MOD1 may further comprise the optical engine ENG1, a first control unit CNT1, and a first communication unit RXTX1. The second module MOD2 may further comprise a second control unit CNT2, and a second communication unit RXTX2. The control units CNT1, CNT2 may communicate with each other e.g. via the communication units RXTX1, RXTX2. Consequently, the first control unit CNT1 may control operation of the optical engine and may also control operation of the display panel. Consequently, the second control unit CNT2 may control operation of the display panel and may also control operation of the optical engine. The touch panel TOU1 may be located e.g. in the first module MOD1 (Fig. 8a), or in the second module MOD2 (Fig. 8b). The second module MOD2 may be e.g. a smartphone, which comprises a display panel LCD1 and a touch panel TOU1. The second module MOD2 may be e.g. a removable attachment to the first module MOD1. The second module MOD2 may be attached to the first module MOD1 e.g. by one or more magnets, by adhesive, and/or by one or more screws. Fig. 8d shows the modules MOD1, MOD2 in a situation where the second module MOD2 has been detached from the first module MOD1.

Referring to Fig. 9, the display panel LCD1 may be e.g. a liquid crystal display. The display panel LCD1 may comprise e.g. a backlight panel LS1, a first polarizer POL1, a first electrode layer E1, a liquid crystal layer LIQ1, a second electrode E2, and a second polarizer POL1. The backlight panel LS1 may provide backlight BL1. The first polarizer may polarize the backlight BL1. At least one of the electrode layers E1, E2 comprises an array of individually controllable electrodes. The orientation liquid crystals in the different pixels of the liquid crystal layer LIQ1 may be controlled by electric fields generated between the electrode layers E1, E2. The liquid crystals may change the polarization state of the backlight BL according to the orientation of the liquid crystals. The liquid crystal layer LIQ1 may form modulated light ML1 by modulating polarization of the backlight BL1. The second polarizer POL2 may allow or prevent propagation of the modulated light ML1 through the second polarizer POL2, depending on the polarization state of the modulated light ML1. Consequently, the display panel LCD1 may form a surface image IMG2 on the display panel LCD1. Dark pixels of the image IMG2 may be formed at positions where the polarizer POL2 prevents propagation of modulated light ML1. Bright pixels of the image IMG2 may be formed at positions where the polarizer POL2 allows propagation of modulated light ML1. The display panel LCD1 may optionally comprise a color filter array RGB1 for displaying the image IMG2 as a multi-color image. The multi-color image IMG2 may be e.g. an RGB image. The RGB image comprises a red sub-image, a green sub-image, and a blue sub-image.

For the person skilled in the art, it will be clear that modifications and variations of the devices and methods according to the present invention are perceivable. The figures are schematic. The particular embodiments described above with reference to the accompanying drawings are illustrative only and not meant to limit the scope of the invention, which is defined by the appended claims.

The above description is only the preferred embodiment of the present application and is not intended to limit the present application. For those skilled in the art, the present application may have various modifications and variations. Any modification, equivalent replacement, improvement, etc. made within the spirit and principle of the present application shall be included in the protection scope of the present application.

## Claims

1. A display device, comprising:
- an optical engine to form a plurality of input light beams (B0) corresponding to image points (P0, P1, P2, P3, P4) of a virtual image (VIMG1),
- an expander panel (EPE1) to form output light beams (B3) by diffractively expanding the input light beams (B0) received from the optical engine (ENG1),
- a display panel (LCD1) to form a second image (IMG2) on a display surface (DSRF) of the display panel (LCD1),
- a user interface (UIF1) to receive user input (COM1),
and
- a control unit (CNT1) to control forming of the first input light beams (B0) and to control forming of the second image (IMG2) based on user input (COM1) received via the user interface (UIF1),
wherein the display device (500) is arranged to form the virtual image (VIMG1) and the second image (IMG2) such that the virtual image (VIMG1) and the second image (IMG2) are viewable from a viewing region (BOX1) of the display device (500), wherein the expander panel (EPE1) is positioned between the display panel (LCD1) and the viewing region (BOX1), wherein the expander panel (EPE1) is transparent so as to allow viewing the second image (IMG2) through the expander panel (EPE1).

2. The display device of claim 1, wherein expander panel (EPE1) causes attenuation of output light (OUT2) emitted from the display panel (LCD1), wherein the expander panel (EPE1) is dimensioned such that the attenuation caused by the expander panel (EPE1) is smaller than 50%.

3. The display device of claim 2, wherein the expander panel (EPE1) overlaps at least 50% of the active display area of the display panel (LCD1).

4. The display device according to claim 2 having a virtual display mode (MODE1), wherein the virtual image (VIMG1) is observable in the virtual display mode (MODE1), wherein the second image (IMG2) is not observable in the virtual display mode (MODE1).

5. The display device according to claim 3, having a surface display mode (MODE2), wherein the second image (IMG2) is observable in the surface display mode (MODE2), wherein the virtual image (VIMG1) is not observable in the surface display mode (MODE2).

6. The display device according to claim 4 or 5, having a composite display mode (MODE0), wherein the virtual image (VIMG1) and the second image (IMG2) are simultaneously observable in the composite display mode (MODE0).

7. The display device according to claim 6, wherein the control unit (CNT1) is arranged to set a display mode (MODEO, MODE1, MODE2) of the device (500) based on user input (COM1) received via a user interface (UIF1).

8. The display device according to claim 6, wherein the display device (500) comprises a transparent touch panel (TOU1) to receive user input (COM1).

9. The display device of claim 8, being arranged to display one or more input elements (E) on the display panel (LCD1), and to receive user input (COM1) via the touch panel (TOU1).

10. The display device according to claim 1, wherein the optical engine (ENG1) comprises a display device (DISP0) to form an input image (IMG0), and collimating optics (LNS0) to form the input light beams (B0) by collimating light of image pixels of the input image (IMG0).

11. The display device according to claim 1, wherein the display device (500) is a portable handheld device.

12. The display device according to claim 1, comprising a first display module (MOD1) and a second detachable display module (MOD2), wherein the first display module (MOD1) comprises the display panel (LCD1), and wherein the second display module (MOD2) comprises the expander panel (EPE1).

13. The display device according to claim 1, comprising a light-blocking layer (BCK1) to prevent propagation of ambient light to the viewing region (BOX1) through the display panel (LCD1), wherein the display panel (LCD1) is located between the blocking layer (BCK1) and the expander panel (EPE1).

14. The display device according to claim 1, comprising a shutter panel (SHU1) located between the display panel (LCD1) and the expander panel (EPE1), so as to provide as controllable dark background for the virtual image (VIMG1).

15. A method for displaying images (VIMG1, IMG2) by using the device according to any of the claims 1 to 14, the method comprising:
- displaying a virtual image (VIMG1) by using the expander panel (EPE1) to form expanded output light beams (B3) from input light beams (B0) received from the optical engine (ENG1),
- displaying a second image (IMG2) on the display panel (LCD1),
and
- controlling displaying the virtual image (VIMG1) and displaying the second image (IMG2) based on user input (COM1) received via the user interface (UIF1).
